# EUROPÄISCHE PATENTSCHRIFT

(11) **EP 0 747 191 B1**
(45) Veröffentlichungstag und Bekanntmachung des Hinweises auf die Patenterteilung: **10.02.1999**
(21) Anmeldenummer: 96106986.1
(22) Anmeldetag: 03.05.1996
(51) Int. Cl.: B29C 43/02, B29C 43/34, B29C 43/36, B29C 31/04

(54) **Verfahren und Vorrichtung zur Herstellung eines Formteils**
Method and apparatus for producing an article
Procédé et appareil pour fabriquer un objet

(30) Priorität: 09.06.1995 DE 19521127
(43) Veröffentlichungstag der Anmeldung: 11.12.1996
(73) Patentinhaber: Schaeffler Teppichboden GmbH, 96052 Bamberg (DE)
(72) Erfinder: Thoma, Wulf, 96170 Lisberg (DE); Labitzke, Ekkehard, 40723 Hilden (DE)
(74) Vertreter: Gaiser, Hartmut, Dipl.-Ing.

(56) Entgegenhaltungen:
- WO-A-91/18828
- DE-U- 9 312 868
- US-A- 5 366 678

## Beschreibung

Die Erfindung betrifft ein Verfahren zur Herstellung eines Formteils, insbesondere Fahrzeug-Auskleidungsteils, aus einem Material aus Fasern, beispielsweise aus Baumwolle oder Kunststoff, und/oder Schaumstoff-Flocken, und einem thermoplastischen Bindemittel, wie Bindefasern und/oder Bindepulver, wobei das Material in ein Formwerkzeug eingebracht, verdichtet und unter Wärmeeinwirkung verbunden wird.

Ein derartiges Formteil kleidet beispielsweise den Bodenraum eines Kraftfahrzeugs aus. Seine untere Fertigkontur ist an die Kontur des Bodenblechs sowie der Einbauten (Lüftung, Kabel etc.) des Fahrzeugs angepaßt. Seine obere Fertigkontur trägt z.B. einen Teppichbodenbelag. Das Formteil gleicht dabei die unterschiedliche Formgestalt des Bodenblechs und des Teppichbodenbelags aus. Es dient außerdem dem Schallschutz und der Wärmeisolation. Als Material für das Formteil lassen sich Baumwoll- und Kunststoffasern und Flocken oder eine Mischung hieraus verwenden. Eine gewisse Bindung dieses Materials erfolgt bereits bei der Ablage des Materials im Werkzeug, indem die Fasern bzw. Flocken mehr oder weniger verhaken. Zur dauerhaften Formstabilisierung der Bindung werden thermoplastische Bindemittel beigemischt.

In dem DE-GM 93 12 868 ist eine Vorrichtung zum Herstellen solcher Formteile beschrieben. Mit dieser Vorichtung sollen Formteile hergestellt werden, die trotz unterschiedlicher Wandstärke eine durchgehend gleiche Dichte aufweisen. Hierfür wird das Material mittels eines programmgesteuerten Düsenkopfes in unterschiedlichen Formbereichen in unterschiedlicher Schichtdicke aufgebracht. Ein von einer Unterdruckquelle erzeugter Luftstrom verdichtet das aufgebrachte Material.

Je vielgestaltiger bzw. engräumiger die unterschiedlichen Formkonturen sind, desto kleiner muß die Düse sein, um die Formkonturen wenigstens im wesentlichen nachzubilden. Je kleiner der Düsenkopf ist, desto länger dauert das Auftragen des Materials. Es besteht weiterhin bei einer solchen Materialeintragungsart die Gefahr, daß das Material geschichtet abgelegt wird. Die Ursache dafür ist der kontinuierlich auf das Material einwirkende Unterdruck, der die Faseranteile parallel zur Werkzeugoberfläche ausrichtet. Ein solches Formteil neigt nach der Fertigstellung unter Umständen leicht zur Delaminierung, d.h. es läßt sich schichtenweise auseinanderziehen. Außerdem ist es schwierig, steile Formkonturänderungen zu verwirklichen, da von dem Düsenkopf immer nur mehr oder weniger flache Materialhügel gebildet werden, welche dann eng benachbarte Dickenunterschiede bei gleicher Dichte nicht mehr zulassen, in dem Fertigformwerkzeug so verformt werden, daß es in unerwünschter Weise zu zonal unterschiedlichen Dichten kommt.

In der WO 91/18828 A1 wird ein Verfahren zur Herstellung von Faser-Formteilen beschrieben. Es werden dabei ebenfalls Fasern mit thermoplastischen Bindemitteln eingesetzt. Eine Füllkammer wird mit dem vorgemischten Material mit Hilfe eines Vakuums gefüllt, dann wird die Füllkammer mit Heißluft durchströmt. Die Kammer wird danach auf die Materialenddicke zusammengefahren und komprimiert. Im folgenden Verfahrensschritt wird das Material in der Füllkammer gekühlt und entnommen. In diesem Verfahren wird die Form der Füllkammer selbst nicht verändert. Das bedeutet, daß im Fertigteil örtliche Dichteunterschiede nach dem Preßvorgang nur begrenzt vermiesen werden können, weil bei der Materialablage nur die Dickenunterschiede des Formteils in der Füllkammer zum Tragen kommen. Diese Dickenunterschiede reichen aber nicht aus, um die Materialdichte im Fertigteil gezielt zu beeinflussen.

In der US-A-5 366 678 ist ein Verfahren und eine Vorrichtung zur Herstellung eines Sitzkissens mit örtlich unterschiedlich Härten beschrieben. In ein unteres Formwerkzeug, das eine (obere) Fertigkontur bildet, wird das Material eingebracht. Anschließend wird ein oberes Formwerkzeug, das die andere (untere) Fertigkontur bildet, auf das Material aufgedrückt, wodurch das Material verdichtet wird. Anschließend wird das Material einer örtlich begrenzten Wärmeeinwirkung ausgesetzt. Formteile gleicher Dichte bei unterschiedlichen Wandstärken lassen sich damit nicht herstellen.

Aufgabe der Erfindung ist es, ein Verfahren der eingangs genannten Art vorzuschlagen, durch das das Material schnell und so in das Formwerkzeug einbringbar ist, daß im Formteil eine durchgehend gleiche oder zonal definiert unterschiedliche Dichte auch bei großen Wandstärkeschwankungen des Formteils erreichbar wird. Außerdem ist es Aufgabe der Erfindung, eine Vorrichtung zur Durchführung des Verfahrens vorzuschlagen.

Erfindungsgemäß ist obige Aufgabe bei einem Verfahren der eingangs genannten Art dadurch gelöst, daß eine für das jeweilige Formteil berechnete Füllkontur von einem 1.Formscheibensatz gebildet wird, daß die Füllkontur von ihrer offenen Einfüllseite mit dem Material aufgefüllt wird, das dann an die offene Einfüllseite ein 1.(oberes) Fertigkontur- Formwerkzeug gebracht wird und daß anschließend ein 2.Formscheibensatz, dessen Scheiben jeweils zwischen den Scheiben des 1.Formscheibensatzes verschieblich sind und die 2.(untere) Fertigkontur des Formteils bilden, im 1.Formscheibensatz gegen das 1.Fertigkontur-Formwerkzeug verschoben wird und dabei das in der Füllkontur befindliche Material verdichtet wird, wonach die Wärmeeinwirkung erfolgt.

Die eine Formhälfte eines Werkzeugs weist zwei verschiedene Konturen auf. Dies wird durch zwei ineinander verschachtelte Formscheibensätze realisiert, wobei der eine Formscheibensatz die Kontur des Fertigteils aufweist und der andere Formscheibensatz die Kontur einer Füllform hat. Beide Formscheibensätze sind gegeneinander verschieblich. Das Werkzeug mit dem Formscheibensatz der Füllkontur wird an der offenen Einfüllseite mit Material aufgefüllt und über oder unter der Fertigteil-Werkzeughälfte (zweite Formhälfte des Werkzeugs) positioniert. Der Formscheibensatz der Fertigkontur (Endkontur) hebt das Material aus dem Formscheibensatz der Füllkontur heraus und drückt es ortsgenau gegen diese zweite Fertigteil-Werkzeughälfte. Das Material wird dadurch mechanisch verdichtet. Danach erfolgt die Wärmeeinwirkung zur Fixierung des Materials.

Das Material kann schnell in die Füllkontur eingebracht werden, da die nach vorheriger Berechnung gestaltete Füllkontur die für das Formteil örtlich notwendige Materialmenge und -verteilung vorgibt. Ein entsprechend der gewünschten Materialverteilung programmgesteuert verfahrbarer Düsenkopf zum Einbringen des Materials kann durch einen Materialaustrag aus einer Breitschlitzdüse einer entsprechenden Befüllungsvorrichtung ersetzt werden. In der Füllkontur lassen sich ohne weiteres auch große Dickenänderungen nachbilden.

Durch die Gestaltung der Tiefen in der Füllkontur ist es möglich, am Formteil durchgehend gleiche oder auch definiert abweichende örtliche Dichten (Raumgewichte) auf einfache Weise zu erreichen. Zonal abweichende Dichten können beispielsweise gewünscht sein, um örtlich angepaßte Schalldämmeigenschaften, wärmetechnische Isolationseigenschaften oder Stauchhärten zu realisieren.

Nachdem die vom 1.Formscheibensatz gebildete Füllkontur mit dem Material gefüllt ist und das Material durch Ansaugen (Unterdruck) vorverdichtet ist, wird gegenüber der Einfüllseite das 1.(obere) Fertigkontur-Formwerkzeug positioniert und das Material wird mittels des 2.Formscheibensatzes, der die 2.(untere) Fertigkontur bildet, gegen dieses gedrückt und damit zu dem gewünschten Raumgewicht (Dichte) mechanisch endverdichtet.

Schließlich erfolgt dann das Aufheizen, bei dem das thermoplastische Bindemittel die verdichtete Materialstruktur stabilisiert. Nach einem folgenden Abkühlen ist das Formteil fertig und kann aus der Form entnommen werden.

Vorzugsweise bildet die offene Einfüllseite des 1.Formscheibensatzes ein ebenes Einfüllniveau. Dadurch ist das Einfüllen des Materials in die Füllkontur besonders einfach, weil es lediglich bis zu einem ebenen Einfüllniveau eingebracht werden muß. überstehende Materialmengen lassen sich abschieben oder abblasen oder fallen von selbst nach unten, wenn - wie in Weiterbildung der Erfindung vorgeschlagen - die Einfüllseite nach unten oder zur Seite hin offen ist.

Eine günstige Vorverdichtung des Materials in der Füllkontur läßt sich dadurch erreichen, daß das Material mit Hilfe eines Luftstromes in die Füllkontur geblasen wird. Durch ein zusätzliches Besaugen der Füllkontur wird eine gleichmäßige Materialvorverdichtung in der Füllkontur erreicht.

Durch das Einblasen bzw. Ansaugen des Materials in einem Luftstrom läßt sich mit Strömungsgeschwindigkeiten zwischen 0,5 und 3 m/sec ein Raumgewicht des Materials in der Füllkontur von etwa 5 bis 15 g/l erreichen. Ergeben die Berechnungen oder Versuche, daß das in die Füllkontur eingebrachte Material ein Raumgewicht von 15 g/l annimmt und soll am fertigen Formteil ein Raumgewicht von beispielsweise 60 g/l erreicht werden, dann ergibt sich daraus der Verdichtungsfaktor 4. Entsprechend dieses Verdichtungsfaktors wird die Füllkontur dimensioniert. Die Tiefen der Füllkontur werden also um den Faktor 4 gegenüber den jeweils örtlichen Soll-Wandstärken des Formteils überhöht gestaltet. Werden darüber hinaus die Tiefen der Füllkontur auf ein einheitliches Füllniveau bezogen, spricht man von einer Volumenprojektion auf eine Ebene. Nach der Kompression des Materials ergibt sich dann eine durchgehend gleiche Raumdichte am fertigen Formteil.

Es sind durch die Bemessung der Tiefen der Füllkontur auch in einfacher Weise im Bedarfsfall örtlich unterschiedliche Raumdichten zu verwirklichen. Hierfür wird in Ausgestaltung der Erfindung die Füllkontur an Stellen des Formteils, an dem dieses ein höheres Raumgewicht aufweisen soll als an anderen Stellen, um einen entsprechenden Faktor tiefer dimensioniert. Durch das Verschieben des die 2.Fertigkontur bildenden 2.Formscheibensatzes ergibt sich dann an den entsprechenden Stellen eine größere Verdichtung des Materials durch dessen mechanische Kompression.

Die Wärmeeinwirkung kann dadurch erfolgen, daß durch das die Formscheibensätze aufweisende Werkzeug Heißluft oder Dampf durch das verdichtete Material geblasen wird. Dies hat allerdings zur Folge, daß die Formscheibensätze mitaufgewärmt werden, was den Wärmebedarf erhöht und ein Abkühlen der Formscheibensätze notwendig macht. Außerdem stehen die Formscheibensätze dann für ein neues Befüllen und Verdichten erst wieder verzögert zur Verfügung, was einen schnellen Taktablauf des Verfahrens behindert. Um eine Wärmeeinwirkung auf die Formscheibensätze zu vermeiden, wird in bevorzugter Ausgestaltung der Erfindung vor der Wärmeeinwirkung das das verdichtete Material tragende 1.Fertigkontur-Formwerkzeug von dem die Formscheibensätze aufweisenden Formwerkzeug entfernt und ein die 2.Fertigkontur aufweisendes poröses Gegenwerkzeug wird auf das verdichtete Material aufgesetzt. Während dieses Vorgangs muß das lose Material durch Unterdruck an der Form gehalten werden. Durch die poröse Form hindurch erfolgt dann die Wärmeeinwirkung auf das verdichtete Material.

Eine Vorrichtung zur Durchführung des Verfahrens zeichnet sich dadurch aus, daß das Formwerkzeug zwei Formscheibensätze aufweist, wobei die Formscheiben der Sätze zwischen einander angeordnet sind und der 2.Formscheibensatz relativ zum 1.Formscheibensatz verschiebbar ist. Der 1.Formscheibensatz bildet eine Füllkontur für das Einfüllen des Materials. Der 2.Formscheibensatz bildet eine der Fertigkonturen des Formteils.

Weitere Ausgestaltungen der Erfindung ergeben sich aus den Unteransprüchen und der folgenden Beschreibung. In der Zeichnung zeigen:

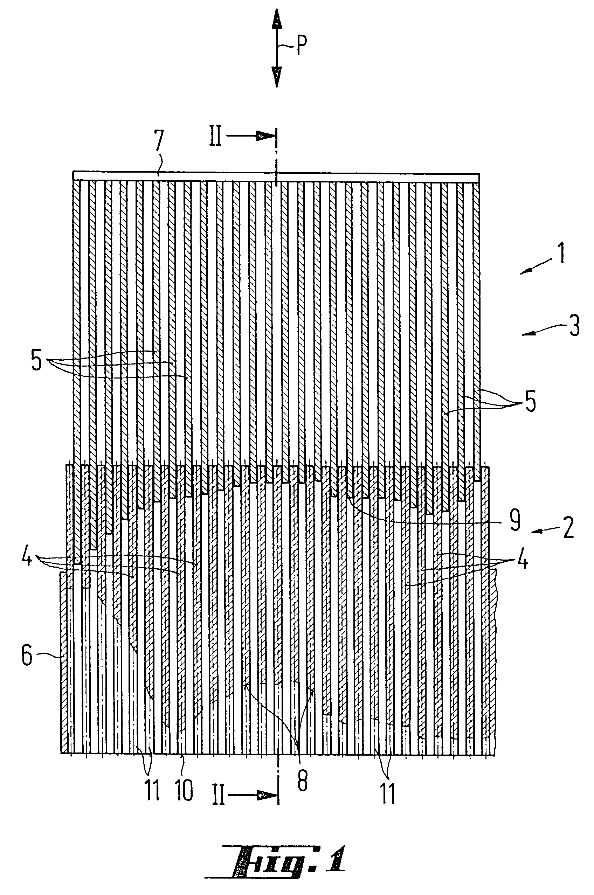

Figur 1 ein Formwerkzeug mit zwei Formscheibensätzen,
Figur 2 eine Ansicht des Formwerkzeugs längs der Linie II-II nach Fig. 1, schematisch in einer Vorrichtung zur Durchführung des Verfahrens in einer ersten Stellung,
Figur 3 die Vorrichtung nach Fig. 2 in einer zweiten Verfahrensstellung.

Ein Formwerkzeug(1) weist einen 1.Formscheibensatz(2) und einen 2.Formscheibensatz(3) auf. Die Formscheiben(4) des 1. Formscheibensatzes (2) greifen jeweils zwischen Formscheiben(5) des 2.Formscheibensatzes(3). Die Formscheiben(4) sind an einem Rahmen(6) gehalten. Die Formscheiben(5) an einer Trägerplatte(7) befestigt. Die Trägerplatte(7) ist gegenüber dem Rahmen(6) in Richtung des Pfeiles(P) verschieblich, so daß die Formscheiben(5) zwischen den Formscheiben(4) verschieblich sind. Die Formscheiben(4) sind so ausgeschnitten, daß sie gemeinsam eine Füllkontur(8) bilden. Die Formscheiben(5) sind so ausgeschnitten, daß sie gemeinsam eine 2.(untere) Fertigkontur(9) des herzustellenden Formteils bilden.

Die zwischen den Formscheiben (4,5) bestehenden, zur Verschiebbarkeit notwendigen Spalte sind so eng bemessen, daß möglichst kein verwendetes Material zwischen sie eindringen kann. Die Dicken der Formscheiben(4,5) sind gleich und so bemessen, daß auch steile Dickenänderungen des Formteils gut nachgebildet werden. Die Formscheiben (4,5) sind beispielsweise aus Aluminiumplatten hergestellt.

Der Formscheibensatz(2) bildet eine nach unten offene Einfüllseite mit einem ebenen Einfüllniveau(10). An den Formscheiben(4) sind Haltenadeln(11) angeordnet, die sich von der Füllkontur(8) bis zum Einfüllniveau(10) erstrecken und parallel zur Pfeilrichtung(P) verlaufen.

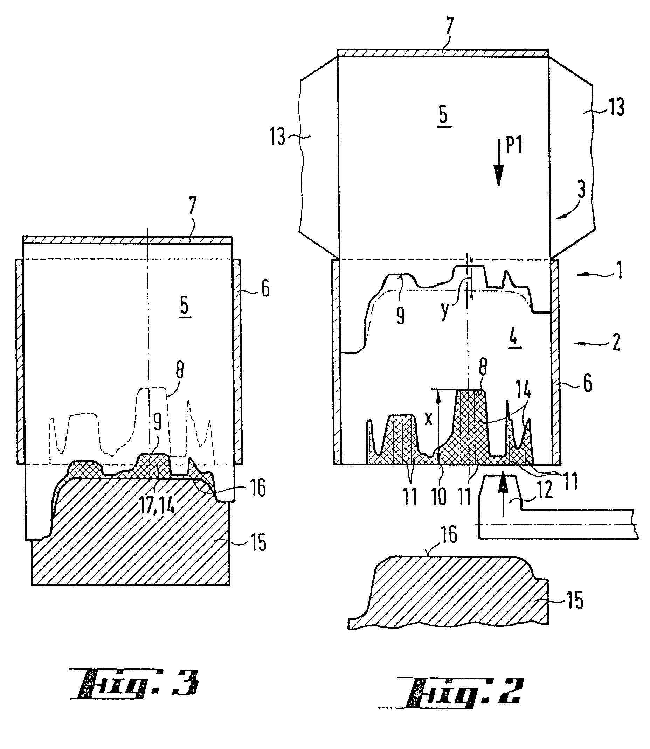

Die 2.Fertigkontur(9) ist entsprechend der Soll-Unterseite des herzustellenden Formteils gestaltet. Die Füllkontur(8) ist so bemessen, daß das zwischen ihr und dem ebenen Einfüllniveau(10) einzubringende Material nach dessen Verdichtung auf das gewünschte Maß das notwenige Raumgewicht ergibt. Fig. 2 zeigt beispielsweise eine Solldicke(Y) des Formteils. Um diese bei einem gewünschten Raumgewicht zu erreichen, hat die Füllkontur (8) an der entsprechenden Stelle die um den Verdichtungsfaktor größere Tiefe(X).

Nachdem die Füllkontur(8) und die 2.Fertigkontur(9) der Formscheibensätze(2,3) entsprechend hergestellt sind, wird das Material durch eine Materialtransporteinrichtung (12), beispielsweise einen flexiblen Schlauchkopf oder eine Breitschlitzdüse (vgl. Fig.2), von unten in die Einfüllseite(10) der Füllkontur(8) eingeblasen. Dabei kann der Schlauchkopf(12) mehr oder weniger frei unter der Einfüllseite(10) bewegt werden, um ein gleichmäßiges Füllen zu erreichen. Der Schlauchkopf(12) kann auch so gestaltet sein, daß er ohne weitere Bewegung die gesamte Füllkontur(8) füllt. Das Einblasen des Materials kann auch direkt von einer Aufbereitungsmaschine her erfolgen, die das Material in der gewünschten faserigen Gestalt unter Beimischung von Bindemitteln zur Verfügung stellt.

Gleichzeitig mit dem Einblasen von Material wird an Unterdruckstutzen(13), die an das Formwerkzeug(1) angeschlossen sind, Luft angesaugt. Dies gewährleistet die gewünschte Vorverdichtung des Materials(14) in der Füllkontur(8). Das Material(14) nimmt in der Füllkontur(8) eine gewisse Verdichtung, beispielsweise 15 g/l, an (vgl. Fig.2). Die bis in das Einfüllniveau(10) reichenden Nadeln(11) bewirken, daß das sich in der Füllkontur(8) verdichtende Material(14) in dieser verbleibt und nicht wieder nach unten fällt. Nach unten fällt nur solches Material, welches das Füllniveau(10) überragt. Das überstehende Material wird von den Nadeln nicht mehr gehalten und mit dem Luftstrom weggeblasen.

Anschließend wird dann der Schlauchkopf(12) weggefahren und ein die 1.(obere) Fertigkontur(16) des Formteils bildendes Formwerkzeug(15) wird vor die Einfüllseite(10) gefahren (vgl. Fig.3). Dieses Formwerkzeug(15) bildet die im Vergleich zur 2.Fertigkontur(9) vergleichsweise glatte, mit einem Teppich zu belegende Oberfläche des Formteils. Es wäre aber auch möglich, daß diese 1.Fertigkontur die dem Boden des Fahrzeugs zugewandte Struktur des Formteils bildet, wobei dann die 2.Fertigkontur(9) die teppichseitige Struktur des Formteils gestaltet.

Ist das Formwerkzeug(15) vor die Einfüllseite(10) gefahren, dann wird der 2.Formscheibensatz(3) in Richtung des Pfeiles(P1) (vgl. Fig.2) verschoben. Das in der Füllkontur(8) abgelegte Material(14) wird jetzt mittels der 2.Fertigkontur(9) des 1.Formscheibensatzes(3) gegen die 1.Fertigkontur(16) des Formwerkzeugs(15) gepreßt, wobei es sich in der gewünschten Weise zum Formteil(17) verdichtet (vgl. Fig.3).

Anschließend wird dann das verdichtete, vorgeformte Formteil(17) der Wärmeeinwirkung ausgesetzt, bei der das thermoplastische Bindemittel des Materials eine Verbindung der faserigen bzw. flockigen Bestandteile herbeiführt und nach Abkühlung eine Formstabilisierung erreicht ist. Anschließend wird das Formteil(17) fertig ausgeworfen.

Die Hitzeeinwirkung kann direkt durch das Formwerkzeug(1) erfolgen. Es ist auch möglich, vor der Hitzeeinwirkung das Formwerkzeug(1) vom auf dem Formwerkzeug(15) liegenden Material abzuheben und auf dieses ein Lochblech aufzusetzen, das die 2.Fertigkontur(9) aufweist und dann durch diese hindurch die Hitzeeinwirkung vorzunehmen.

Beim beschriebenen Ausführungsbeispiel ist davon ausgegangen, daß die Einfüllseite(10) nach unten offen ist. Es wäre jedoch auch möglich, die Anordnung so zu wählen, daß die Einfüllseite(10) zu einer Seite hin offen ist.

## Patentansprüche

1. Verfahren zur Herstellung eines Formteil, insbesondere Fahrzeug-Auskleidungsteils, aus einem Material aus Fasern, beispielsweise aus Baumwolle oder Kunststoff und/oder Schaumstoff-Flocken, und einem thermoplastischen Bindemittel, wie Bindefasern und/oder Bindepulver, wobei das Material in ein Formwerkzeug eingebracht, verdichtet und unter Wärmeeinwirkung verbunden wird,
dadurch gekennzeichnet,
daß eine für das jeweilige Formteil(17) berechnete Füllkontur(8) Von einem 1.Formscheibensatz(2) gebildet wird, daß die Füllkontur(8) von ihrer offenen Einfüllseite(10) mit dem Material(14) aufgefüllt wird, daß dann an die offene Einfüllseite(10) ein 1.(oberes) Fertigkontur-Formwerkzeug(15) gebracht wird und daß anschließend ein 2.Formscheibensatz(3), dessen Scheiben(5) jeweils zwischen den Scheiben(4) des 1.Formscheibensatzes(2) verschieblich sind und die 2.(untere) Fertigkontur(9) des Formteils(17) bilden, im 1.Formscheibensatz(2) gegen das 1.Fertigkontur-Formwerkzeug(15) verschoben wird und dabei das in der Füllkontur(8) befindliche Material(14) verdichtet wird, wonach die Wärmeeinwirkung erfolgt.

2. Verfahren nach Anspruch 1,
dadurch gekennzeichnet,
daß die offene Einfüllseite des 1.Formscheibensatzes(2) ein ebenes Einfüllniveau(10) bildet.

3. Verfahren nach Anspruch 1 oder 2,
dadurch gekennzeichnet,
daß das Material in die Füllkontur(8) geblasen und in der Füllkontur(8) angesaugt wird, wodurch es sich in der Füllkontur(8) vorverdichtet.

4. Verfahren nach einem der vorhergehenden Ansprüche,
dadurch gekennzeichnet,
daß die Füllkontur(8) örtlich jeweils um den Verdichtungsfaktor tiefer ist als die Dicke des Formteils (17), wobei der Verdichtungsfaktor dem Verhältnis des gewünschten Raumgewichts (Dichte) des Formteils(17) zum Raumgewicht (Dichte) des in die Füllkontur(8) eingefüllten Materials(14) entspricht.

5. Verfahren nach Anspruch 4,
dadurch gekennzeichnet,
daß die Füllkontur(8) an Stellen des Formteils(17), an denen dies ein höheres Raumgewicht (Dichte) aufweisen soll als an anderen Stellen, um einen entsprechenden Faktor tiefer ist.

6. Verfahren nach einen der vorhergehenden Ansprüche,
dadurch gekennzeichnet,
daß die Einfüllseite(10) nach unten offen ist, wobei das Material von unten in die Füllkontur(8) eingebracht wird, und daß der 2. Formscheibensatz (3) von oben gegen das vor die Einfüllseite(10) gestellte 1.Fertigkontur-Formwerkzeug(15) geschoben wird.

7. Verfahren nach einem der vorhergehenden Ansprüche,
dadurch gekennzeichnet,
daß vor der Wärmeeinwirkung das das verdichtete Material tragende 1.Fertigkontur-Formwerkzeug(15) von dem die Formscheibensätze(2,3) aufweisenden Formwerkzeug(1) entfernt wird und ein die 2.Fertigkontur(9) aufweisendes Lochblech auf das verdichtete Material aufgesetzt wird.

8. Vorrichtung zur Herstellung eines Formteils, insbesondere Fahrzeug-Auskleidungsteils, aus einem Material aus Fasern und/oder Flocken, beispielsweise aus Baumwolle oder Kunststoff, und einem thermoplastischen Bindemittel, wie Bindefasern und/oder Bindepulver, mit einem Formwerkzeug,
dadurch gekennzeichnet,
daß das Formwerkzeug(1) zwei Formscheibensätze(2,3) aufweist, wobei die Formscheiben (4,5) der Sätze zwischen einander angeordnet sind und der 2.Formscheibensatz(3) relativ zum 1.Formscheibensatz(2) verschieblich ist, und daß der 1.Formscheibensatz(2) eine Füllkontur(8) für das Einfüllen des Materials(14) und der 2.Formscheibensatz(3) eine der Fertigkonturen(9) des Formteils(17) bildet.

9. Vorrichtung nach Anspruch 8,
dadurch gekennzeichnet,
daß an den Formscheiben(4) des 1.Formscheibensatzes(2) Haltenadeln(11) für das Material angeordnet sind, die sich in den Ebenen der Formscheiben(4) des 1.Formscheibensatzes(2) und parallel zur Verschieberichtung(P) des 2.Formscheibensatzes(3) erstrecken.

10. Vorrichtung nach Anspruch 9,
dadurch gekennzeichnet,
daß die Haltenadeln(11) bis in das Einfüllniveau(10) der Füllkontur(8) reichen.

11. Vorrichtung nach einem der vorhergehenden Ansprüche 8 bis 10,
dadurch gekennzeichnet,
daß die Formscheiben(4,5) so ausgebildet und angeordnet sind, daß das Material(14) kaum zwischen sie eindringt und sie im verdichteten Material Dickenänderungen des Formteils möglichst genau nachbilden.

## Claims

1. Process for the production of a moulding, particularly a vehicle lining part, from a fibre material, e.g. of cotton or plastic, and/or foam flocks, and a thermoplastic binder, such as binding fibres and/or binding powders, the material being introduced into a mould, compressed and combined under heat action, characterized in that a filling contour (8) calculated for the particular moulding (17) is formed by a first mould disk set (2), that the filling contour (8) is filled with material (14) from its open filling side (10), on which is then applied a first (upper) finished contour mould (15) and that subsequently a second mould disk set (3), whose disks (5) are in each case displaceable between the disks (4) of the first mould disk set (2) and form the second (lower) finished contour (9) of the moulding (17), is displaced in the first mould disk set (2) against the first finished contour mould (15) and the material (14) in the filling contour (8) is compressed, followed by heat action.

2. Process according to claim 1, characterized in that the open filling side of the first mould disk set (2) forms a planar filling level (10).

3. Process according to claim 1 or 2, characterized in that the material is blown into the filling contour (8) and sucked in the latter, so that it is precompressed in said filling contour (8).

4. Process according to one of the preceding claims, characterized in that locally the filling contour (8) is deeper by the compression factor than the thickness of the moulding (17), the compression factor corresponding to the ratio of the desired bulk density of the moulding (17) to the bulk density of the material (14) filled into the filling contour (8).

5. Process according to claim 4, characterized in that the filling contour (8) at points of the moulding (17) where the latter is to have a higher bulk density is deeper by a corresponding factor than at other points.

6. Process according to one of the preceding claims, characterized in that the filling side (10) is open to the bottom, the material being introduced from below into the filling contour (8) and that the second mould disk set (3) is moved from above against the first finished contour mould (15) placed in front of the filling side (10).

7. Process according to one of the preceding claims, characterized in that, prior to the heat action, the first finished contour mould (15) carrying the compressed material is removed from the mould (1) having the mould disk sets (2, 3) and a perforated plate having the second finished contour (9) is placed on the compressed material.

8. Apparatus for the production of a moulding, particularly a vehicle lining part, from a material formed by fibres and/or flocks, e.g. cotton or plastic, and a thermoplastic binder, such as binding fibres and/or binding powders, with a mould, characterized in that the mould (1) has two mould disk sets (2, 3), the mould disks (4, 5) of the sets being positioned between one another and the second mould disk set (3) is displaceable relative to the first mould disk set (2) and that the first mould disk set (2) forms a filling contour (8) for filling the material (14) and the second mould disk set (3) one of the finished contours (9) of the moulding (17).

9. Apparatus according to claim 8, characterized in that on the mould disks (4) of the first mould disk set (2) are provided retaining needles (11) for the material, which extend in the planes of the mould disks (4) of the first mould disk set (2) and parallel to the movement direction (P) of the second mould disk set (3).

10. Apparatus according to claim 9, characterized in that the retaining needles (11) extend into the filling level (10) of the filling contour (8).

11. Apparatus according to one of the preceding claims 8 to 10, characterized in that the mould disks (4, 5) are so constructed and positioned that the material (14) scarcely penetrates between them and, in the compressed material, they precisely simulate thickness changes of the moulding.

## Revendications

1. Procédé de fabrication d'une pièce, notamment d'une pièce de revêtement de véhicule, en un matériau en fibres, par exemple en coton ou en matière synthétique et/ou en flocons de matière alvéolaire, et un liant thermoplastique, comme des fibres de liage et/ou une poudre de liage, où le matériau est introduit dans un outil de façonnage, compacté et lié sous l'effet de la chaleur,
caractérisé en ce
qu'un contour de remplissage (8) calculé pour la pièce respective (17) est formé par un 1er jeu de disques de façonnage (2), en ce que le contour de remplissage (8) est rempli à son côté de remplissage ouvert (10) du matériau (14), en ce qu'il est amené ensuite au côté de remplissage ouvert (10) un 1er outil de façonnage de contour fini (supérieur) (15) et en ce qu'ensuite, un 2ème jeu de disques de façonnage (3) dont les disques (5) sont déplaçables respectivement entre les disques (4) du 1er jeu de disques de façonnage (2) et forment le 2ème contour fini (inférieur) (9) de la pièce (17), est déplacé dans le 1er jeu de disques de façonnage (2) contre le 1er outil de façonnage de contour fini (15) et en ce que, ce faisant, le matériau (14) se trouvant dans le contour de remplissage (8) est compacté, suivi de l'application de la chaleur.

2. Procédé selon la revendication 1,
caractérisé en ce que
le côté de remplissage ouvert du 1er jeu de disques de façonnage (2) forme un niveau de remplissage plan (10).

3. Procédé selon la revendication 1 ou 2,
caractérisé en ce que
le matériau est soufflé dans le contour de remplissage (8) et est aspiré dans le contour de remplissage (8) par quoi il est compacté préalablement dans le contour de remplissage (8).

4. Procédé selon l'une des revendications précédentes,
caractérisé en ce que
le contour de remplissage (8) est localement plus profond respectivement du facteur de compactage que l'épaisseur de la pièce (17), le facteur de compactage correspondant au rapport du poids spécifique recherché (densité) de la pièce (17) au poids spécifique (densité) du matériau (14) introduit dans le contour de remplissage (8).

5. Procédé selon la revendication 4,
caractérisé en ce que
le contour de remplissage (8) est plus profond d'un facteur correspondant à des endroits de la pièce (17) où celle-ci doit présenter un poids spécifique (densité) plus élevé qu'aux autres endroits.

6. Procédé selon l'une des revendications précédentes,
caractérisé en ce que
le côté de remplissage (10) est ouvert vers le bas, où le matériau est introduit depuis le bas dans le contour de remplissage (8) et en ce que le 2ème jeu de disque de façonnage (3) est déplacé de dessus contre le 1er outil de façonnage de contour fini (15) placé devant le côté d'entrée (10).

7. Procédé selon l'une des revendications précédentes,
caractérisé en ce que
avant l'application de la chaleur, le 1er outil de façonnage de contour fini (15) portant le matériau compacté est éloigné de l'outil de façonnage (1) présentant les jeux de disques de façonnage (2, 3) et qu'une tôle perforée présentant le 2ème contour fini (9) est placée sur le matériau compacté.

8. Dispositif de fabrication d'une pièce, notamment d'une pièce de revêtement de véhicule, en un matériau en fibres et/ou flocons, par exemple en coton ou en matière synthétique et en un liant thermoplastique, comme des fibres de liage et/ou une poudre de liage avec un outil de façonnage,
caractérisé en ce que
l'outil de façonnage (2) présente deux jeux de disques de façonnage (2, 3), les disques de façonnage (4, 5) des jeux étant disposés les uns entre les autres et le 2ème jeu de disques de façonnage (3) est déplaçable relativement au 1er jeu de disques de façonnage (2), et en ce que le 1er jeu de disques de façonnage (2) forme un contour de remplissage (8), pour le remplissage du matériau (14) et le 2ème jeu de disques de façonnage (3), l'un des contours finis (9) de la pièce (17).

9. Dispositif selon la revendication 8,
caractérisé en ce que
sont disposées aux disques de façonnage (4) du 1er jeu de disques de façonnage (2) des aiguilles de retenue (11) pour le matériau qui s'étendent dans les plans des disques de façonnage (4) du 1er jeu de disques de façonnage (2) et parallèlement à la direction de déplacement (P) du 2ème jeu de disques de façonnage (3).

10. Dispositif selon la revendication 9,
caractérisé en ce que
les aiguilles de retenue (11) s'étendent jusque dans le niveau de remplissage (10) du contour de remplissage (8).

11. Dispositif selon l'une des revendications précédentes 8 à 10,
caractérisé en ce que
les disques de façonnage (4, 5) sont réalisés et disposés de façon que le matériau (14) n'entre guère entre ceux-ci et qu'ils reproduisent de la manière la plus précise possible dans le matériau compacté des modifications de l'épaisseur de la pièce.
